# EUROPEAN PATENT SPECIFICATION

(11) **EP 1 908 639 B1**
(45) Date of publication and mention of the grant of the patent: **28.04.2010**
(21) Application number: 06021021.8
(22) Date of filing: 06.10.2006
(51) Int. Cl.: B60R 16/03, B60R 16/023, G01C 21/36, H04N 7/15

(54) **Infotainment system**
Infotainmentsystem
Système d' infodivertissement

(43) Date of publication of application: 09.04.2008
(73) Proprietor: Harman Becker Automotive Systems GmbH, 76307 Karlsbad (DE)
(72) Inventor: Geiger, Erich, 75236 Kämpfelbach (DE)
(74) Representative: Bertsch, Florian Oliver

(56) References cited:
- EP-A- 1 559 995
- WO-A-2004/080042
- WO-A-2006/033128
- DE-A1- 19 939 631
- DE-C1- 19 600 644

## Description

This invention relates to an infotainment system for use in vehicles and to a method for controlling the vehicle infotainment system. The invention relates especially to upgradeable infotainment systems in which part of the system is upgraded more often than another part of the infotainment system.

### Related Art

Infotainment systems are well-known in the art and are used widely for various purposes. Generally, infotainment systems are used for providing information to the user. The information provided to the user may be stored in the infotainment system itself (e.g. a motion picture on a DVD or an audio sound of a compact disk), may be received by the infotainment system from other sources, e.g. such as a broadcast radio or television program, or may be generated by the infotainment system based on certain input data such as current location or the like, e.g. in the case of a navigation system. The information is typically provided to the user in an acoustic form, in visual form or in a combination thereof.

There is a need for providing infotainment systems that are adapted to the specific needs of the driver or the passengers in the vehicle such as an automobile. During long journeys the driver and the passengers desire to be entertained by being provided with information. For the driver in particular navigation instructions provided by the infotainment system are of particular interest. However, there exists a certain mismatch between the life cycle of a vehicle that is typically used for ten or more years and the innovation cycle of an infotainment system that is often replaced or upgraded by more powerful systems after a short period of time such as six or twelve months.

Often infotainment systems use some of the infrastructure that is built into the vehicle such as the amplifier and the loudspeakers. This infrastructure usually is not replaced more frequently than the vehicle itself and has normally the same life cycle as the vehicle itself. This is mainly due to the fact that a lot of effort would be required to replace components that are firmly mounted into the vehicle.

DE 199 39 631 A1, considered as the closest prior art, shows the preamble of claim 1 and discloses a multimedia system having a detachable operating front which is used as anti-theft system, the detachable operating front comprising a display and its own processing unit. In the detached state, the operating front is a mobile phone.

Accordingly, it is therefore desirable to replace the infotainment system used in a vehicle more often than the vehicle without having a need to replace the vehicle infrastructure required for using the infotainment system. As a consequence, a need exists to provide infotainment systems for use in vehicles in which certain components can be updated or replaced more often than other components. In this context a first component will normally remain mounted in the vehicle and fixed to the vehicle infrastructure whereas another component should be easily replaceable by the user. Furthermore it is desirable to use the existing input and output capabilities of the first component.

### Summary of the Invention

This need is met by the features of the independent claims. In the dependent claims preferred embodiments of the invention are described.

According to a first aspect of the invention an infotainment system for use in a vehicle is provided, the system comprising a first module fixedly installed in the vehicle, the first module comprising a first processing unit and a first input device. Additionally, a second module is provided which is detachably connectable to the first module, the second module comprising at least one second processing unit. Furthermore, a detecting unit is provided detecting when the first module is coupled to the second module. According to the invention, when the detecting unit detects that the second module has been coupled to the first module, data input to the first processing unit for processing are at least partly directed to the second processing unit and processed by the second processing unit. In such a system it is easier to use an upgraded version of the infotainment system. It is possible to use a new software release and to use a new processing unit which may have more computing power than the processing unit of the first module which is fixedly installed in the vehicle. In the present context the term "processing unit" as used herein refers to an electronic unit comprising at least one microprocessor with at least one input and at least one output. The first processing unit is typically intended to be firmly mounted to the vehicle and to remain with the vehicle for most of the vehicle's life. By transferring the data to the second processing unit for processing, the processing capabilities of the second processing unit can be used. The second processing unit may provide additional features not present in the first processing unit. By simply connecting the second processing unit to the first processing unit and by transferring the data to the second processing unit, new features provided by a new software release can be used.

Preferably, almost the complete processing is carried out in the second processing unit. Additionally, it is possible that all the input data are transmitted to the second processing unit for processing, even though it is possible that some pre-processing is carried out in the first processing unit before the data transfer to the second processing unit.

According to a preferred embodiment of the invention, the first processing unit may be connected to the vehicle data output. The vehicle data output may provide a signal corresponding to any status of the vehicle, the vehicle surrounding or the output of any other information source connected to the vehicle. Vehicle data outputs include, without limitation, analogue signals such as current velocity, digital signals provided by individual information sources (such as clocks, thermometers, location sensors such as global positioning sensor systems etc.), digital signals such as vehicle data networks (such as the vehicle CAN bus through which engine-related information is communicated, the comfort CAN bus through which comfort-related information is communicated, and a multi-media data network through which multi-media data is communicated between multi-media components of the vehicle).

The first processing unit may be connected to vehicle data networks through which the first processing unit may receive certain information relating to the vehicle. One example for such a vehicle data network is the CAN bus that is used by certain vehicle components to exchange the data. The first processing unit may by way of example retrieve from this CAN bus the current speed of the vehicle. These vehicle-related data can also be transmitted to the second processing unit, as the vehicle-related information may be needed in the second processing unit for some of the processing steps. By way of example the velocity signal of the vehicle may be needed in a navigation module guiding the driver to a predetermined destination.

Furthermore, the first module comprises a first output device containing a visual output device and an acoustic output device, both of them being connected to the first processing unit. The first processing unit may be connected to one or more visual displays such as a central display located in the center of the dashboard and visible for the driver as well as for the passengers, a driver display located conveniently for the driver to read out driving-related information, a head-up display for displaying information on the windshield, a rear seat display visible for the passengers sitting on the rear seat, a co-driver display mainly visible for the co-driver and the like. In addition to the visual output device the first module comprises one or more acoustic output devices included in a typical vehicle audio system including electromagnetic transducers. The vehicle audio system may be passive or, more preferably, active such as by including a power amplifier. The first processing unit may be the only audio source for the acoustic reproduction or there may be other audio sources that are connected to the first processing unit.

The first module comprises a first input device. Additionally, a second input device may be provided in the second module, the second input device being connected to the second processing unit, the latter receiving input signals from the second input device. The first input device may be a device such as a keyboard, a single key, a slider, a rotary button, a pushbutton or the like. Furthermore, the first input device may be connected to a speech input device, an acoustic input device such as a microphone, or a visual input device such as a video camera. The second input device provided on the second module refers to a device through which a user can enter commands or data into the device. Both input devices can include in addition to the embodiments mentioned above sensors, touch-free sensors, touchscreens as well as speech dialogue systems converting spoken language into a format understood by the device. When the second module is connected to the first module, the user can either control the overall system by entering commands through the first or second input device.

As described above, the first processing unit can be connected to a vehicle data output or vehicle data networks through which vehicle-related information can be obtained. Additionally, it is possibly that the second processing unit, when connected to the first processing unit, is also directly connected to a vehicle data output or a vehicle data network. The second processing unit can receive the vehicle-related data either from the connection to the first processing unit and the transmission from the first to the second processing unit, however it is also possible that the second processing unit directly receives data from the data output or vehicle data network.

In nowadays vehicles the first module often comprises a display incorporated into the dashboard of the vehicle. According to an embodiment of the invention the second module may also comprise a visual data output device such as a display coupled to the second processing unit. In many cases the visual output device to which the second processing unit is connected is mounted together with the second processing unit into the same housing. In these cases the visual output device is intended to be used when the second processing unit is operated independently of the vehicle and of the first processing unit. However, it is also possible that the second visual data output may be switched off and that all the visual data are displayed on the first visual data output device installed in the vehicle. Visual output devices useful in the context of this invention include liquid crystal displays, TFT displays, light-emitting diode displays, organic LED displays, projectors, head-up displays and the like.

Furthermore, each of the modules may comprise its own data storage unit. A data storage unit may be used in connection with an optical media driver including a CD, DVD and like, hard disk, flash memory, memory sticks or the like. These data storage units allow for the non-volatile storage of large amounts of data such as video and audio data, digital map data and operating software that can be readily retrieved by the first or second processing units. Once the second processing unit is connected to the first processing unit, either processing unit may make the data stored on its respective storage unit accessible to the other processing unit. The storage unit may be firmly integrated into the processing unit such as an integral hard disk or an integral optical media driver or may be detachably connected to the processing unit in the case of a memory stick connected via a connection such as a USB connection. By adding a data storage unit the second module data and operating software can be updated more easily. In the second storage unit a new version of an operating software may be stored and/or updated map data may be provided by the second storage unit, which can be used in connection with a navigation module and on the basis of which the navigation system can calculate the fastest route to a predetermined destination. When two versions of the same data are provided on the first storage unit and the second storage unit, the overall system may be designed in such a way that the newer data are used for processing.

The second processing unit may also be connected to at least one acoustic output device. In many devices the acoustic output device of the second processing unit is mounted together with the second processing unit into the same housing. This acoustic output device is used when a second module is used independently of the first module. According to a preferred embodiment of the invention, the acoustic data output of the first module is used when the second module is connected to the first module. This first acoustic output device of the first module which is fixedly installed in the vehicle often provides a better sound quality than the acoustic output device incorporated into the second module. Usually several loudspeakers are provided in the vehicle, some in the front part of the vehicle and some in the rear part of the vehicle so that up to eight or twelve loudspeakers are used inside a vehicle. These loudspeakers are normally especially designed for the reduced space inside the vehicle and are normally not replaced during the life time of the vehicle. These loudspeakers provide a much better sound quality than the loudspeaker provided in the second module. Accordingly, when the second module is connected to the first module, preferably the sound signals from the second module are also output via the acoustic output devices of the first module.

When the second processing unit is coupled to the first processing unit, most of the data input to the first processing unit are directed to the second processing unit and processed by the second processing unit, as the computing power of the second processing unit is higher than the computing power of the first processing unit. Additionally, it is possible that the first processing unit pre-processes all or some of the input data for the first processing unit before transmitting the data to the second processing unit for processing. The system software running on a second processing unit can generate an output signal that is transmitted back to the first processing unit which transmits the output signal to the output devices connected to it. The first processing unit may or may not process the output signals before transmitting them to the output devices connected to it.

Preferably audio output data processed by the second processing unit and output by the second processing unit are transmitted back to the first processing unit where the audio output data are mixed with audio data received from units directly coupled to the first processing unit. The combined audio output is then output by the acoustic output device of the first module. By way of example the first module may comprise an audio sound source such as a compact disk or a radio receiver. These signals are output via the output devices of the first module fixedly installed in the vehicle. The second module now may have an updated navigation unit providing better processing capabilities and newer map data. In this context the second processing unit may generate an audio output such as a speech output indicating to the driver which route to take in order to arrive at a predetermined destination. This audio output is then also transmitted to the first processing unit where it is mixed to the audio signals of the first module, the combined audio signal being output via the acoustic output devices of the first module.

In the same way it is also possible that visual output streams generated by signal processing of the second processing unit are transmitted back to the first processing unit. In this case the second processing unit may generate a visual output stream and a video control signal, both signals being transmitted to the first processing unit, which mixes the video output stream of the second processing unit with a video signal received from video sources connected to the first processing unit, the combined signal being output on the visual output device of the first module. The visual output device of the first module which is normally a display fixedly incorporated in the vehicle is often larger and has a better image resolution or better image qualities than the display which may be provided in the housing of the second module. Consequently, it can be preferable to display all the video signals from the second and the first processing unit on the display of the first module. However, it may also be possible that, when the first processing unit is not directly connected to a visual data output device that all the video signals are displayed on a display provided on the second module.

According to another embodiment of the invention two second processing units may be provided in the second module, one of them being geared towards providing a replaceable display (for later upgrades), the second one being geared towards providing easily upgradeable computing power. The first of the second processing units may be placed in the dashboard such that the display is visible for the driver. The second one may be placed in less prominent position such as the trunk of the vehicle or some other hidden position.

It is possible that the second module does not comprise a data input device and that it only provides better computing performances or newer data compared to the data provided in the first module. If this is the case, the second module comprising the second processing unit needs not to be installed in the dashboard for easy access to the driver, but the second module may be installed in any place of the vehicle where it can be connected to the first module. When the second module comprises two second processing units, the second processing unit geared towards providing upgradeable computer power can be installed in any location of the vehicle, whereas the other second processing unit may be placed in the dashboard such that it is accessible to the user or that a display is visible for the driver.

As both modules can be used independently of each other, each module comprises a power supply. The power supply of the first module is normally a battery provided in the vehicle also powering other electronic components of the vehicle. The second module is also equipped with a power supply. When the second module is now coupled to the first module, the second module may also be powered by the power supply of the first module. The power supply of the first module can normally be recharged more easily during driving. Additionally, this power supply of the first module usually has larger capacities then the power supply of the second module.

According to one embodiment of the invention the visual output device of the first module is retractable. The term "retractable" as used herein refers to devices that can be moved away from their regular position in which they are used. For example, a retractable device can be removable by the user or a retractable device may be movable into a position in which it is no longer visible or otherwise usable for the user. The retractable device may furthermore be coupled with a motor that can move the retractable device away from the regularly used position.

The invention furthermore relates to a method for controlling a vehicle infotainment system, the system comprising a first processing unit fixedly installed in a vehicle and a second processing unit detachably connected to the first processing unit. This method comprises the step of detecting whether the second processing unit is connected to the first processing unit. In the affirmative, i.e. when a connection between the two units is established, data inputs into the first processing are at least partly directed to the second processing unit for processing by the second processing unit.

For an effective handling of the combined units the first processing unit makes the data stored in its first data storage unit accessible to the second processing unit and vice versa. The main processing steps are now carried out on the second processing unit, as the second processing unit may have a newer software version and/or may have more computing power. However, it is possible that data input into an input device of the first processing unit are transmitted to the first processing unit where they may be pre-processed before they are transmitted to the second processing unit for processing. After the data have been processed by the second processing unit, the processed output data can be transmitted to an output device directly coupled to the second processing unit. However, it is also possible that the processed data are transmitted back to the first processing unit which then transmits the data for output to an output device directly coupled to the first processing unit.

When audio data are processed by the second processing unit, these audio data are preferably transmitted back to the first processing unit where they can be mixed with audio data received from other audio units directly coupled to the first processing unit. Preferably the combined audio signal is then output via the loudspeakers connected to the first processing unit. When the processed data contain visual data such as an visual output stream, the visual output stream and the video control signal generated by the second processing unit can be transmitted back to the first processing unit. The first processing unit then mixes the video output stream of the second processing unit with a video signal received from any other video sources connected to the first processing unit. It is also envisagable that the second processing unit generates digitally encoded display instructions to the first processing unit instead of a video output stream. The combined video signal is then output via the display directly connected to the first processing unit. It should be understood that it is also possible to output a visual output stream on the display connected to the second processing unit. In this case the visual output stream of the first processing unit is directed to the second processing unit and output on the second visual output device. Additionally, the visual output stream of the third processing unit can also be directed to the second visual output device.

When the second processing unit is connected to the first processing unit, the most prominent part of the signal processing is carried out in the second processing unit. For some of the processing steps a status information of some of the vehicle parameters is necessary. Accordingly, signals relating to any status of the vehicle which were transmitted to the first processing unit are automatically transmitted from the first to the second processing unit, when the second processing unit is not directly coupled to the corresponding data output.

Other features and advantages of the invention will become apparent to one skilled in the art upon examination of the following figures and detailed description.

### Brief Description of the Figures

The components in the figures are not necessarily to scale, emphasis instead being placed upon illustrating the principles of the invention.
Fig. 1 is a schematic view of an infotainment system having a first module and a second module connectable to the first module,
Fig. 2 shows a flowchart comprising the fundamental steps of signal processing when the second module is coupled to the first module,
Fig. 3 is a flowchart showing the main steps of processing of video data with two different processing units, and
Fig. 4 is a flowchart showing the main steps when audio data are processed in a system having two processing units.

### Detailed Description of Preferred Embodiments

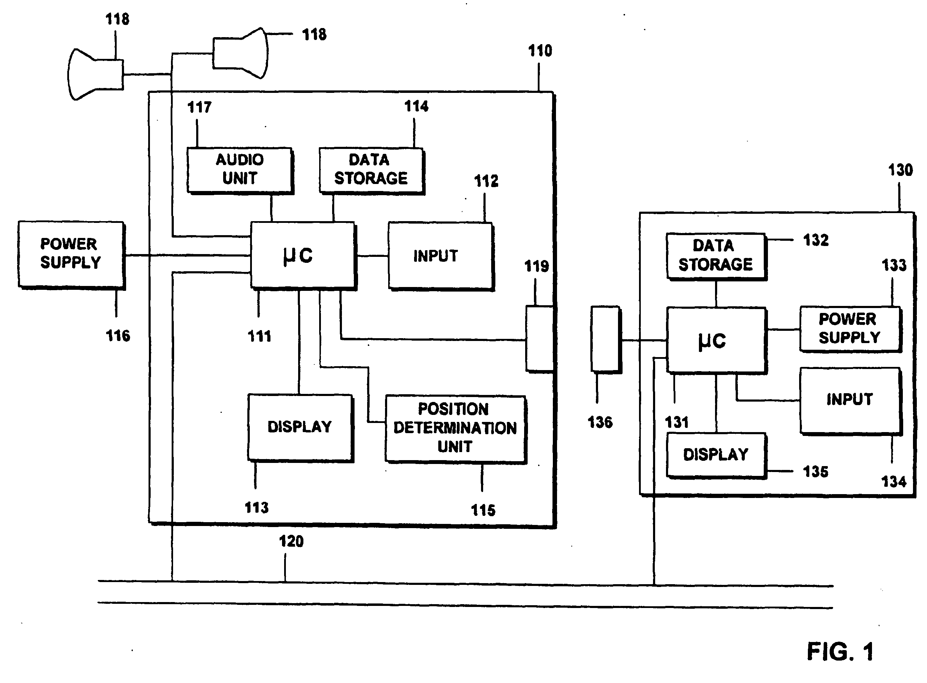

In Fig. 1 an infotainment system used in a vehicle is shown. The infotainment system comprises a first module 110 which is fixedly installed in the vehicle. The first module 110 comprises a first processing unit 111 which controls the functioning of the module 110. The first processing unit 111 is connected to an input device 112 such as a keyboard through which a user can enter commands or data into the device. Input devices may include buttons, rotary buttons, sliders, levers, keys, keyboards, and touchscreens. Additionally, a display 113 is connected to the processing unit 111 to display any information provided by the processing unit 111.

By way of example the first module 110 may comprise an audio module or a radio receiver (both not shown) and the display may show which video program the driver is listening to or which track on a compact disk the user is listening to. Additionally, a data storage 114 is provided storing the software needed in the processing unit 111 and storing all the data necessary for the functioning of the first module 110. Furthermore, a position determination unit 115 may be provided which is part of a navigation module. This position determination unit may comprise an antenna for receiving satellite-based signals, the position determination unit 115 calculating the position based on satellite signals. The first module 110 can be powered by a power supply 116 which can be the battery of the vehicle. This power supply is normally recharged when the vehicle is driving so that the power supply is able to supply power to all the different units of the first module. As discussed above, the first module 110 may furthermore comprise an audio unit 117 generating an acoustic output signal. This signal can be reproduced using the different loudspeakers 118 fixedly installed in the vehicle. By way of example different loudspeakers 118 can be provided for the different frequency ranges, a subwoofer for the lower frequency components, a medium for the higher frequency components and a tweeter for the highest frequency components. It should be understood that other units such as a telecommunication unit may be provided in the first module. Normally, many of the components shown in the first module 110 are fixedly installed in the vehicle such as the loudspeakers 118 and the display 113.

The first processing unit may furthermore be connected to a vehicle data network 120 through which the first processing unit may receive certain information relating to the vehicle. One example for such a vehicle data network is the engine CAN bus used for the data exchange by certain vehicle components. In addition, the data network may comprise a comfort CAN bus, the first processing unit controlling certain comfort-related components of the vehicle such as an air conditioning by sending commands through this comfort CAN bus.

The infotainment system further comprises a second module 130 that is detachably connected to the first processing unit. To this end the first module comprises a first coupler 119, the second module 130 also comprising a coupling element 136 adapted to be coupled to the first coupler 119.

The second processing unit is intended for a more regular replacement, for example if more powerful technology is available, then the first processing unit and thus is detachably connected to the first processing unit. The detachable connection includes one or more of the following connections: analogue electric connection, serial digital connection (unidirectional or bidirectional), parallel digital connection (unidirectional or bidirectional), wireless digital connection (infrared, radio frequency, Bluetooth, ultrasonic, etc., either of the foregoing unidirectional or bidirectional). Additionally, an optical data connection is also possible.

In the following all different components of the second module are entitled as second components in comparison to the components of the first module. The second module comprises a second processing unit 131, which is normally more powerful than the first processing unit 111 and/or uses an updated version of an operating software. The second module furthermore comprises a second data storage 132 for storing software and other data to be used by the second processing unit 131. Additionally, a power supply 133 is provided in the second module. This power supply 133 is needed, as the second module 130 may also be used at a detached state in which no connection to the first processing unit is available. In this case the second module is an autarkic system having its own system software rendering the second processing unit useful as a stand-alone unit. In this case necessary input and output devices such as data entry devices or input unit 134 are provided. The second module furthermore comprises a display 135 which is used when the second module 130 is used as a stand-alone unit. As soon as the second module and the second processing unit is connected to the first processing unit, both processing units detect that the connection has been established and adapt their behavior accordingly. When the second module is coupled to the first module, the coupling can be detected by a detecting unit (not shown) and a signal may be sent to the first processing unit. This signal or executable program can indicate to the first processing unit that a second processing unit is connected and takes over the processing of the data. Accordingly, the first processing unit transmits the data to the second processing unit for processing.

As also shown in Fig. 1, when the second processing unit is connected to the first processing unit the second module may also have a direct connection to the vehicle network 120. Accordingly, the second processing unit 131 can receive vehicle-related information also directly from the network 120. However, it is also possible that no direct connection between the second processing unit and the data network 120 exists and that the necessary information is transmitted to the second processing unit via the first processing unit and the connection 119 and 136. The connection may be a wired connection as shown. However, a wireless connection between the two modules is also possible.

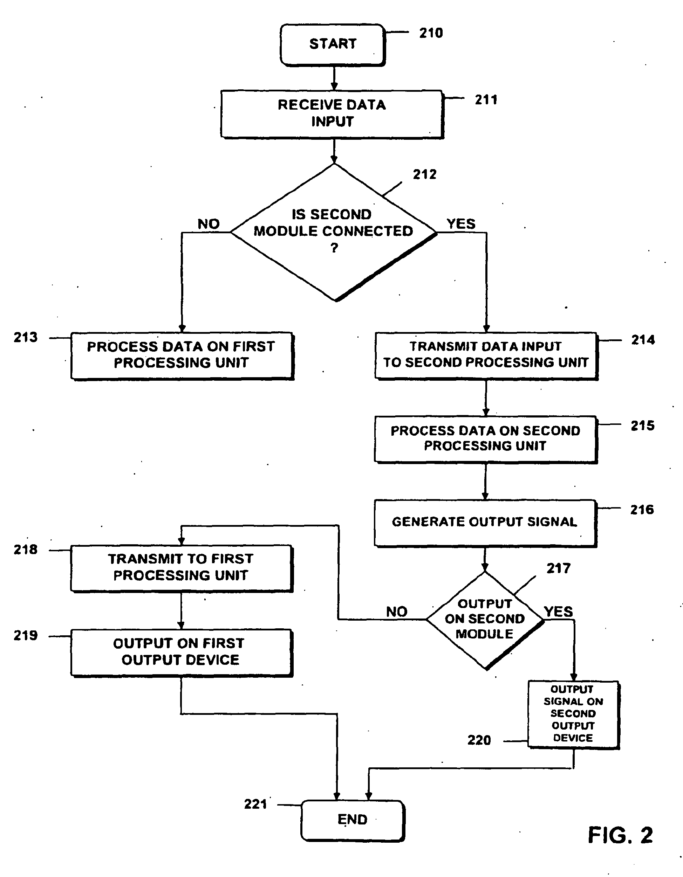

As will be explained in connection with Fig. 2 in one mode of operation of the infotainment system the main system software of the infotainment system is now executed on the second processing unit. The first processing unit now redirects all or part of the input which it receives to the second processing unit for further processing. After starting the process in step 110, the first processing unit may receive a data input in step 211 for processing. In step 212 it is asked whether the second module is connected to the first module. If this is not the case the first module works as a stand-alone unit and processes the data in the first processing unit (step 213). If, however, the second module and the second processing unit is coupled to the first processing unit, the data are transmitted to the second processing unit in step 214. The data input can originate from the input device 112 of the first module or from the input device 134 of the second module. The data are then processed on the second processing unit in step 215. By processing the data in the second processing unit the processed data generate an output signal in step 216. In step 217 it is then asked whether the result of the processing should be output on any of the output devices of the second module. If this is not the case, the output signal is transmitted back to the first processing unit in step 218 and the signal is output on the first output device in step 219. If, however, the output signal should be output on any of the signal output devices of the second module, the signal is output on one of the second output devices in step 220. The process ends in step 221.

The process steps of Fig. 2 show that with the processing in the second processing unit new software components comprised in the second processing unit or new data comprised in the data storage of the second module can be used in an easy way. It becomes possible to provide new or updated features separate from the hardware installed in the vehicle. As can be seen from Fig. 2, the second module needs not necessarily comprise a display or an input device so that there is no need for installing the second module in the limited space of the dashboard. As long as a connection to the first processing unit is available, the second module can be installed in any suitable place of the vehicle.

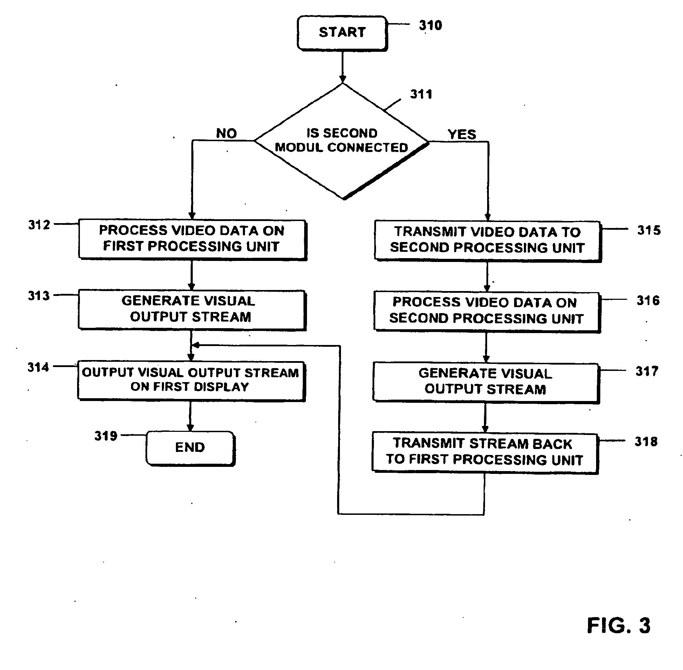

In Fig. 3 an embodiment is shown in which the combined system processes video data to be output on one of the visual output devices. After the start of the process in step 310 it is asked in step 311 whether the second module is presently connected to the first module. If this is not the case, the video data are processed on the first processing unit in step 312 so that a visual output stream is generated in step 313 which is output on a display of the first module in step 314. If it is determined in step 311 that the second module and the second processing unit is coupled to the first processing unit, the signal processing is changed in such a way that the video data are transmitted from the first processing unit to the second processing unit in step 315. The video data are then processed on the second processing unit in step 316 and a visual output stream is generated in step 317. In many cases the second module may be a module which is mainly present for higher computing power. The second module may be located at a position distant to the vehicle dashboard, e.g. in the trunk of the vehicle in a mechanical holding device including an electrical connection to the first processing device which is normally positioned in the dashboard of the vehicle, where it is accessible to the driver. In this case the visual output stream generated by the second processing unit is transmitted to the first processing unit in step 318. After transmission, the visual output stream is then output on the first display as was explained in connection with step 314. The process ends in step 319.

In another embodiment it is possible that the second processing unit generates a visual output stream and a video control signal in step 317 which are then transmitted to the first processing unit. The first processing unit then mixes the video output stream received from the second processing unit with a video signal received from any other video source connected to the first processing unit and displays it on the first display. By way of example a parker assistant may be provided having a camera displaying the rear part of the vehicle. This visual output stream of the video camera can then be mixed with any other visual output stream transmitted from the second processing unit.

In another embodiment it is also possible that the second module is coupled to the first module in such a way that it is directly coupled to the first module on the dashboard. In this example the second module is visible to the user. Accordingly, when the second module comprises a display, it is also possible to display all the visual output streams on the second display and to shut off the first display if present. In addition, it might be possible to use both displays at the same time. On one display a navigation map for guiding a user to a predetermined destination may be shown, whereas on another display a program information of a radio receiver may be shown.

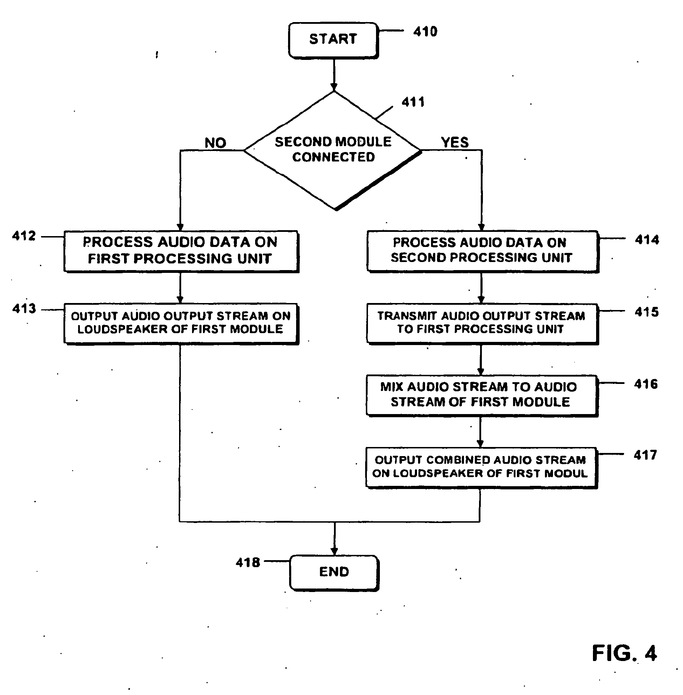

In Fig. 4 the processing of audio data in the combined infotainment system is shown. After the start of the process in step 410 it is asked whether the second processing unit is connected in step 411. If this is not the case the audio data are processed on the first processing unit in step 412 and the generated audio output stream is output via the loudspeakers 118 of the vehicle in step 413. If, however, the second processing unit is connected to the first processing unit, the audio data are transmitted to the second processing unit and processed on the second processing unit in step 414. After processing, the audio output stream is then transmitted back to the first processing unit in step 415. In step 416 the audio stream generated in the second processing unit is then mixed to an audio stream of the first module and the combined audio stream is output via the loudspeakers of the first module in step 417. This may be the case when a navigation system is running at the same time as an audio unit reproducing an audio sound stored on a compact disk or any other storage medium. The navigation system may be provided on the second module and speed commands are generated in order to guide the user to the destination by indicating the direction the driver has to take. This audio stream is then transmitted back to the first processing unit, where it is mixed to the audio output of the audio source of the first module. The combined signal is then output via the loudspeaker system of the vehicle.

The above-described examples in Fig. 3 and 4 of the audio and video signals shown that, when the second processing unit is present, the main processing steps are carried out on the second processing unit. In the next step it depends which of the modules has the better output capabilities. In the case of an audio output, normally the loudspeakers provided in the vehicle provide a better sound quality than the loudspeaker which might be present in the second module. Additionally, the display of the first module fixedly installed in the vehicle may have better visual qualities than a display provided in the second module. The processing unit in the second module is mainly provided to improve the computing efficiency of the overall entertainment system or to provide new software releases which should be used within the infotainment systems without the need to replace the complete hardware.

## Claims

1. An infotainment system for use in vehicles, comprising:
- a first module (110) fixedly installed in the vehicle, the first module comprising a first processing unit (111),
- a second module (130) detachably connectable to the first module (110), the second module comprising a second processing unit (131),
- a detecting unit detecting when the first module is coupled to the second module,
**characterized in that** the first module comprises as a first input device (112) a keyboard through which a user enters data, wherein when the detecting unit detects the coupling of the first module to the second module, data input to the first processing unit (111) via the first input device (112) are at least partly directed to the second processing unit (131) and processed by the second processing unit generating output data in response to the data input, wherein the first module comprises a first visual output device (113) and an acoustic output device (118), both of them being connected to the first processing unit (111), wherein the output data are transmitted back to first processing unit which transmits the output data to the first output device.

2. The infotainment system according to claim 1, **characterized in that** the first processing unit (111) is connected to a vehicle data output.

3. The infotainment system according to any of the preceding claims, **characterized in that** the second module (130) comprises a second input device (134) connected to the second processing unit through which the second processing unit receives input signals.

4. The infotainment system according to any of the preceding claims, **characterized in that** the computing power of the second processing unit (131) is higher than the computing power of the first processing unit (111).

5. The infotainment system according to any of the preceding claims, **characterized in that** the second processing unit (131) is connected to a vehicle data output or vehicle data network.

6. The infotainment system according to any of the preceding claims, **characterized in that** the second module (130) comprises a visual data output device coupled to the second processing unit (131).

7. The infotainment system according to any of the preceding claims, **characterized in that** each module comprises a data storage unit (114, 132), wherein upon coupling the first and second module together, either processing unit makes accessible the data stored on its respective data storage unit to the other processing unit.

8. The infotainment system according to any of the preceding claims, **characterized in that** the first processing unit (111) processes all or some of the input data for the first processing unit before transmitting the data to the second processing unit (131) for processing.

9. The infotainment system according to any of the preceding claims, **characterized in that** the second processing unit (131) generates output data which are transmitted to an output device of the second module (130), which is coupled to the second processing unit.

10. The infotainment system according to any of the preceding claims, **characterized in that** audio output data of second processing unit (131) are transmitted to the first processing unit (111), where the audio output data are mixed with audio data received from units directly coupled to the first processing unit, wherein the acoustic output device of the first module outputs the combined audio signal.

11. The infotainment system according to any of the preceding claims, **characterized in that** the second processing unit (131) generates a visual output stream and a video control signal, both signals being transmitted to the first processing unit (111) which mixes the video output stream of the second processing unit with a video signal received from video sources connected to the first processing unit, the combined signal being output on the visual output device of the first module.

12. The infotainment system according to any of the preceding claims, **characterized in that** the second processing unit (131) is connected to a visual output device of the second module (130).

13. The infotainment system according to any of the preceding claims, **characterized in that** two second processing units (131) are provided in the second module, one of them being geared towards a replaceable visual output device the other being geared towards providing upgradeable computing power.

14. The infotainment system according to any of the preceding claims, **characterized in that** each module comprises a power supply (116, 133), wherein upon connection of the second module to the first module the second module is powered by the power supply of the first module.

15. The infotainment system according to any of the preceding claims, **characterized in that** the visual data output device (113) of the first module is retractable.

16. The infotainment system according to any of the preceding claims, **characterized in that** the second processing unit is connected to a second input device.

17. Method for controlling a vehicle infotainment system, the system comprising a first module with a first processing unit (111) fixedly installed in the vehicle, the system comprising a second module with a second processing unit (131) detachably connected to the first processing unit, the method comprises the step of detecting whether the second processing unit (131) is connected to the first processing unit (111), **characterized in that** when a connection between the two processing units is detected, data input into the first processing unit (111) via a keyboard of an input unit of the first processing unit are at least partly directed to the second processing unit (131) and processed by the second processing unit generating output data in response to the data input, wherein said output data processed by the second processing unit (131) are transmitted back to the first processing unit (111) which transmits the output data to a first output device directly connected to the first processing unit.

18. Method according to claim 17, wherein upon coupling the first and second processing units together, either processing unit makes accessible the data stored on its respective data storage unit to the other processing unit.

19. Method according to claim 17 or 18, wherein data input into an input device (112) of the first processing unit (111) are transmitted to the first processing unit where all or some of them are processed before they are transmitted to the second processing unit (131) for processing.

20. Method according to any of claims 17 to 19, wherein audio output data of the second processing unit (131) are transmitted to first processing unit (111), where the audio output data are mixed with audio data received from units directly coupled to the first processing unit, wherein the combined audio signal is output by the acoustic output device (118) of the first module.

21. Method according to any of claims 17 to 20, wherein a visual output stream and a video control signal is generated by the second processing unit (131), both signals being transmitted to the first processing unit which mixes the video output stream of the second processing unit with a video signal received from video sources connected to the first processing unit, the combined signal being output on the visual output device of the first module.

22. Method according to any of claims 17 to 21, wherein a visual output stream of the first processing unit (111) is directed to a second visual output device.

23. Method according to any of claims 17 to 22, wherein signals relating to any status of the vehicle and transmitted to the first processing unit (111) are transmitted from the first to the second processing unit (131).

## Patentansprüche

1. Infotainmentsystem zur Verwendung in Fahrzeugen, umfassend:
- ein erstes Modul (110), welches fest in dem Fahrzeug installiert ist, wobei das erste Modul eine erste Verarbeitungseinheit (111) umfasst,
- ein zweites Modul (130), welches lösbar mit dem ersten Modul (110) verbindbar ist, wobei das zweite Modul eine zweite Verarbeitungseinheit (131) umfasst,
- eine Erfassungseinheit, welche erfasst, wenn das erste Modul mit dem zweiten Modul gekoppelt ist,
**dadurch gekennzeichnet, dass** das erste Modul als eine erste Eingabevorrichtung (112) eine Tastatur umfasst, über welche ein Benutzer Daten eingibt, wobei, wenn die Erfassungseinheit die Kopplung des ersten Moduls mit dem zweiten Modul erfasst, Daten, welche über die erste Eingabevorrichtung (112) in die erste Verarbeitungseinheit (111) eingegeben werden, zumindest teilweise zu der zweiten Verarbeitungseinheit (131) geleitet werden und von der zweiten Verarbeitungseinheit, welche Ausgabedaten in Abhängigkeit von den eingegebenen Daten erzeugt, verarbeitet werden, wobei das erste Modul eine erste optische Ausgabevorrichtung (113) und eine akustische Ausgabevorrichtung (118) umfasst, welche beide mit der ersten Verarbeitungseinheit (111) verbunden sind, wobei die Ausgabedaten zurück zu der ersten Verarbeitungseinheit übertragen werden, welche die Ausgabedaten zu der ersten Ausgabevorrichtung überträgt.

2. Infotainmentsystem nach Anspruch 1, **dadurch gekennzeichnet, dass** die erste Verarbeitungseinheit (111) mit einer Fahrzeugdatenausgabe verbunden ist.

3. Infotainmentsystem nach einem der vorhergehenden Ansprüche, **dadurch gekennzeichnet, dass** das zweite Modul (130) eine mit der zweiten Verarbeitungseinheit verbundene zweite Eingabevorrichtung (134) umfasst, über welche die zweite Verarbeitungseinheit Eingangssignale empfängt.

4. Infotainmentsystem nach einem der vorhergehenden Ansprüche, **dadurch gekennzeichnet, dass** die Rechenleistung der zweiten Verarbeitungseinheit (131) größer als die Rechenleistung der ersten Verarbeitungseinheit (111) ist.

5. Infotainmentsystem nach einem der vorhergehenden Ansprüche, **dadurch gekennzeichnet, dass** die zweite Verarbeitungseinheit (131) mit einer Fahrzeugdatenausgabe oder einem Fahrzeugdatennetz verbunden ist.

6. Infotainmentsystem nach einem der vorhergehenden Ansprüche, **dadurch gekennzeichnet, dass** das zweite Modul (130) eine optische Datenausgabevorrichtung umfasst, welche mit der zweiten Verarbeitungseinheit (131) gekoppelt ist.

7. Infotainmentsystem nach einem der vorhergehenden Ansprüche, **dadurch gekennzeichnet, dass** jedes Modul eine Datenspeichereinheit (114, 132) umfasst, wobei aufgrund eines Zusammenkoppelns des ersten und des zweiten Moduls jede Verarbeitungseinheit die in ihrer entsprechenden Datenspeichereinheit gespeicherten Daten der anderen Verarbeitungseinheit zugreifbar macht.

8. Infotainmentsystem nach einem der vorhergehenden Ansprüche, **dadurch gekennzeichnet, dass** die erste Verarbeitungseinheit (111) alle oder einige der Eingangsdaten für die erste Verarbeitungseinheit verarbeitet, bevor die Daten zu der zweiten Verarbeitungseinheit (131) für eine Verarbeitung übertragen werden.

9. Infotainmentsystem nach einem der vorhergehenden Ansprüche, **dadurch gekennzeichnet, dass** die zweite Verarbeitungseinheit (131) Ausgabedaten erzeugt, welche zu einer Ausgabevorrichtung des zweiten Moduls (130) übertragen werden, welche mit der zweiten Verarbeitungseinheit gekoppelt ist.

10. Infotainmentsystem nach einem der vorhergehenden Ansprüche, **dadurch gekennzeichnet, dass** Audioausgabedaten der zweiten Verarbeitungseinheit (131) zu der ersten Verarbeitungseinheit (111) übertragen werden, wobei die Audioausgabedaten mit Audiodaten gemischt werden, welche von Einheiten empfangen werden, welche direkt mit der ersten Verarbeitungseinheit gekoppelt sind, wobei die akustische Ausgabevorrichtung des ersten Moduls das kombinierte Audiosignal ausgibt.

11. Infotainmentsystem nach einem der vorhergehenden Ansprüche, **dadurch gekennzeichnet, dass** die zweite Verarbeitungseinheit (131) einen optischen Ausgabestrom und ein Videosteuersignal erzeugt, wobei beide Signale zu der ersten Verarbeitungseinheit (111) übertragen werden, welche den Videoausgabestrom der zweiten Verarbeitungseinheit mit einem Videosignal mischt, welches von Videoquellen empfangen wird, welche mit der ersten Verarbeitungseinheit verbunden sind, wobei das kombinierte Signal auf der optischen Ausgabevorrichtung des ersten Moduls ausgegeben wird.

12. Infotainmentsystem nach einem der vorhergehenden Ansprüche, **dadurch gekennzeichnet, dass** die zweite Verarbeitungseinheit (131) mit einer optischen Ausgabevorrichtung des zweiten Moduls (130) verbunden ist.

13. Infotainmentsystem nach einem der vorhergehenden Ansprüche, **dadurch gekennzeichnet, dass** zwei zweite Verarbeitungseinheiten (131) in dem zweiten Modul vorgesehen sind, wobei eine davon für eine austauschbare optische Ausgabevorrichtung vorgesehen ist und die andere für ein Bereitstellen einer erweiterbaren Rechenleistung vorgesehen ist.

14. Infotainmentsystem nach einem der vorhergehenden Ansprüche, **dadurch gekennzeichnet, dass** jedes Modul eine Stromversorgung (116, 133) umfasst, wobei aufgrund einer Verbindung des zweiten Moduls mit dem ersten Modul das zweite Modul von der Stromversorgung des ersten Moduls versorgt wird.

15. Infotainmentsystem nach einem der vorhergehenden Ansprüche, **dadurch gekennzeichnet, dass** die optische Datenausgabevorrichtung (113) des ersten Moduls abschwenkbar ist.

16. Infotainmentsystem nach einem der vorhergehenden Ansprüche, **dadurch gekennzeichnet, dass** die zweite Verarbeitungseinheit mit einer zweiten Eingabevorrichtung verbunden ist.

17. Verfahren zum Steuern eines Fahrzeuginfotainmentsystems, wobei das System ein erstes Modul mit einer ersten Verarbeitungseinheit (111) umfasst, welches fest in dem Fahrzeug installiert ist, wobei das System ein zweites Modul mit einer zweiten Verarbeitungseinheit (131) umfasst, welche lösbar mit der ersten Verarbeitungseinheit verbunden ist, wobei das Verfahren den Schritt eines Erfassens, ob die zweite Verarbeitungseinheit (131) mit der ersten Verarbeitungseinheit (111) verbunden ist, umfasst, **dadurch gekennzeichnet, dass,** wenn eine Verbindung zwischen den zwei Verarbeitungseinheiten erfasst wird, Daten, welche über eine Tastatur einer Eingabeeinheit der ersten Verarbeitungseinheit in die erste Verarbeitungseinheit (111) eingegeben werden, zumindest teilweise zu der zweiten Verarbeitungseinheit (131) geleitet werden und von der zweiten Verarbeitungseinheit, welche Ausgabedaten in Abhängigkeit von den eingegebenen Daten erzeugt, verarbeitet werden, wobei die von der zweiten Verarbeitungseinheit (131) verarbeiteten Ausgabedaten zurück zu der ersten Verarbeitungseinheit (111) übertragen werden, welche die Ausgabedaten zu einer ersten Ausgabevorrichtung überträgt, welche mit der ersten Verarbeitungseinheit direkt verbunden ist.

18. Verfahren nach Anspruch 17, wobei aufgrund eines Zusammenkoppelns der ersten und zweiten Verarbeitungseinheit jede Verarbeitungseinheit die in ihrer entsprechenden Datenspeichereinheit gespeicherten Daten der anderen Verarbeitungseinheit zugreifbar macht.

19. Verfahren nach Anspruch 17 oder 18, wobei Daten, welche in eine Eingabevorrichtung (112) der ersten Verarbeitungseinheit (111) eingegeben werden, zu der ersten Verarbeitungseinheit übertragen werden, wo alle oder einige von ihnen verarbeitet werden, bevor sie zu der zweiten Verarbeitungseinheit (131) für eine Verarbeitung übertragen werden.

20. Verfahren nach einem der Ansprüche 17 bis 19, wobei Audioausgabedaten der zweiten Verarbeitungseinheit (131) zu der ersten Verarbeitungseinheit (111) übertragen werden, wobei die Audioausgabedaten mit Audiodaten gemischt werden, welche von Einheiten empfangen werden, welche direkt mit der ersten Verarbeitungseinheit gekoppelt sind, wobei das kombinierte Audiosignal von der akustischen Ausgabevorrichtung (118) des ersten Moduls ausgegeben wird.

21. Verfahren nach einem der Ansprüche 17 bis 20, wobei ein optischer Ausgabestrom und ein Videosteuersignal von der zweiten Verarbeitungseinheit (131) erzeugt werden, wobei beide Signale zu der ersten Verarbeitungseinheit übertragen werden, welche den Videoausgabestrom der zweiten Verarbeitungseinheit mit einem Videosignal mischt, welches von mit der ersten Verarbeitungseinheit verbundenen Videoquellen empfangen wird, wobei das kombinierte Videosignal auf der optischen Ausgabevorrichtung des ersten Moduls ausgegeben wird.

22. Verfahren nach einem der Ansprüche 17 bis 21, wobei ein optischer Ausgabestrom der ersten Verarbeitungseinheit (111) zu einer zweiten optischen Ausgabevorrichtung geleitet wird.

23. Verfahren nach einem der Ansprüche 17 bis 22, wobei Signale, welche einen Status des Fahrzeugs betreffen und zu der ersten Verarbeitungseinheit (111) übertragen wurden, von der ersten zu der zweiten Verarbeitungseinheit (131) übertragen werden.

## Revendications

1. Système d'infodivertissement pour utilisation dans des véhicules, comprenant:
- un premier module (110) installé fixement dans le véhicule, le premier module comprenant une première unité de traitement (111),
- un deuxième module (130) connectable de manière amovible au premier module (110), le deuxième module comprenant une deuxième unité de traitement (131),
- une unité de détection détectant quand le premier module est couplé au deuxième module,
**caractérisé en ce que** le premier module comprend, en tant que premier dispositif d'entrée (112), un clavier par lequel un utilisateur entre des données, dans lequel, lorsque l'unité de détection détecte le couplage du premier module au deuxième module, les données entrées dans la première unité de traitement (111) par l'intermédiaire du premier dispositif d'entrée (112) sont au moins partiellement dirigées vers la deuxième unité de traitement (131) et traitées par la deuxième unité de traitement, générant des données de sortie en réponse aux données entrées, dans lequel le premier module comprend un premier dispositif de sortie visuelle (113) et un dispositif de sortie acoustique (118), les deux dispositifs étant reliés à la première unité de traitement (111), les données de sortie étant retransmises vers la première unité de traitement qui transmet les données de sortie au premier dispositif de sortie.

2. Système d'infodivertissement selon la revendication 1, **caractérisé en ce que** la première unité de traitement (111) est reliée à une sortie de données de véhicule.

3. Système d'infodivertissement selon l'une quelconque des revendications précédentes, **caractérisé en ce que** le deuxième module (130) comprend un deuxième dispositif d'entrée (134) relié à la deuxième unité de traitement, par l'intermédiaire duquel la deuxième unité de traitement reçoit des signaux d'entrée.

4. Système d'infodivertissement selon l'une quelconque des revendications précédentes, **caractérisé en ce que** la puissance de calcul de la deuxième unité de traitement (131) est plus élevée que la puissance de calcul de la première unité de traitement (111).

5. Système d'infodivertissement selon l'une quelconque des revendications précédentes, **caractérisé en ce que** la deuxième unité de traitement (131) est reliée à une sortie de données de véhicule ou à un réseau de données de véhicule.

6. Système d'infodivertissement selon l'une quelconque des revendications précédentes, **caractérisé en ce que** le deuxième module (130) comprend un dispositif de sortie visuelle de données couplé à la deuxième unité de traitement (131).

7. Système d'infodivertissement selon l'une quelconque des revendications précédentes, **caractérisé en ce que** chaque module comprend une unité de stockage de données (114, 132), dans lequel, après couplage des premier et deuxième modules entre eux, chaque unité de traitement rend accessible à l'autre unité de traitement les données stockées dans son unité de stockage de données respectif.

8. Système d'infodivertissement selon l'une quelconque des revendications précédentes, **caractérisé en ce que** la première unité de traitement (111) traite toutes les ou quelques unes des données d'entrée pour la première unité de traitement avant de transmettre les données à la deuxième unité de traitement (131) pour traitement.

9. Système d'infodivertissement selon l'une quelconque des revendications précédentes, **caractérisé en ce que** la deuxième unité de traitement (131) génère des données de sortie qui sont transmises à un dispositif de sortie du deuxième module (130) qui est couplé à la deuxième unité de traitement.

10. Système d'infodivertissement selon l'une quelconque des revendications précédentes, **caractérisé en ce que** des données de sortie audio de la deuxième unité de traitement (131) sont transmises à la première unité de traitement (111) où les données de sortie audio sont mélangées avec des données audio reçues d'unités directement couplées à la première unité de traitement, le dispositif de sortie acoustique du premier module émettant le signal audio combiné.

11. Système d'infodivertissement selon l'une quelconque des revendications précédentes, **caractérisé en ce que** la deuxième unité de traitement (131) génère un flux de sortie visuelle et un signal de commande vidéo, les deux signaux étant transmis à la première unité de traitement (111) qui mélange le flux de sortie vidéo de la deuxième unité de traitement avec un signal vidéo reçu de sources vidéo reliées à la première unité de traitement, le signal combiné étant émis sur le dispositif de sortie visuelle du premier module.

12. Système d'infodivertissement selon l'une quelconque des revendications précédentes, **caractérisé en ce que** la deuxième unité de traitement (131) est reliée à un dispositif de sortie visuelle du deuxième module (130).

13. Système d'infodivertissement selon l'une quelconque des revendications précédentes, **caractérisé en ce que** deux deuxièmes unités de traitement (131) sont prévues dans le deuxième module, l'une d'elles étant destinée à un dispositif de sortie visuelle échangeable, l'autre étant destinée à la fourniture d'une puissance de calcul pouvant être mise à niveau.

14. Système d'infodivertissement selon l'une quelconque des revendications précédentes, **caractérisé en ce que** chaque module comprend une alimentation en énergie (116, 133), dans lequel, à l'issue de la connexion du deuxième module au premier module, le deuxième module est alimenté par l'alimentation en énergie du premier module.

15. Système d'infodivertissement selon l'une quelconque des revendications précédentes, **caractérisé en ce que** le dispositif de sortie de données visuelles (113) du premier module est amovible.

16. Système d'infodivertissement selon l'une quelconque des revendications précédentes, **caractérisé en ce que** la deuxième unité de traitement est reliée à un deuxième dispositif d'entrée.

17. Procédé de commande d'un système d'infodivertissement de véhicule, le système comprenant un premier module avec une première unité de traitement (111) installée fixement dans le véhicule, le système comprenant un deuxième module avec une deuxième unité de traitement (131) reliée de manière amovible à la première unité de traitement, le procédé comprenant l'étape de détecter si la deuxième unité de traitement (131) est reliée à la première unité de traitement (111), **caractérisé en ce que,** lorsqu'une connexion entre les deux unités de traitement est détectée, des données entrées dans la première unité de traitement (111) par l'intermédiaire d'un clavier d'une unité d'entrée de la première unité de traitement sont au moins partiellement dirigées ver la deuxième unité de traitement (131) et traitées par la deuxième unité de traitement, générant des données de sortie en réponse aux données entrées, lesdites données de sortie traitées par la deuxième unité de traitement (131) étant retransmises vers la première unité de traitement (111) qui transmet les données de sortie vers un premier dispositif de sortie relié directement à la première unité de traitement.

18. Procédé selon la revendication 17, dans lequel, après le couplage des première et deuxième unités de traitement entre elles, chaque unité de traitement permet à l'autre unité de traitement l'accès aux données stockées dans son unité de stockage de données respective.

19. Procédé selon la revendication 17 ou 18, dans lequel les données entrées dans un dispositif d'entrée (112) de la première unité de traitement (111) sont transmises vers la première unité de traitement où toutes ou quelques-unes d'elles sont traitées avant d'être transmises vers la deuxième unité de traitement (131) pour traitement.

20. Procédé selon l'une quelconque des revendications 17 à 19, dans lequel des données de sortie audio de la deuxième unité de traitement (131) sont transmises vers la première unité de traitement (111), où les données de sortie audio sont mélangées avec des données audio reçues d'unités directement couplées à la première unité de traitement, le signal audio combiné étant émis par le dispositif de sortie acoustique (118) du premier module.

21. Procédé selon l'une quelconque des revendications 17 à 20, dans lequel un flux visuel de sortie et un signal de commande vidéo sont générés par la deuxième unité de traitement (131), les deux signaux étant transmis vers la première unité de traitement qui mélange le flux vidéo de sortie de la deuxième unité de traitement avec un signal vidéo reçu de sources vidéo reliées à la première unité de traitement, le signal combiné étant émis sur le dispositif de sortie visuelle du premier module.

22. Procédé selon l'une quelconque des revendications 17 à 21, dans lequel un flux visuel de sortie de la première unité de traitement (111) est dirigé vers un deuxième dispositif de sortie visuelle.

23. Procédé selon l'une quelconque des revendications 17 à 22, dans lequel des signaux relatifs à un état quelconque du véhicule et transmis à la première unité de traitement (111) sont transmis de la première vers la deuxième unité de traitement (131).
